# FASCICULE DE BREVET EUROPEEN

(11) **EP 3 371 483 B1**
(45) Date de publication et mention de la délivrance du brevet: **21.08.2019**
(21) Numéro de dépôt: 16809124.7
(22) Date de dépôt: 02.11.2016
(51) Int. Cl.: F16H 3/06, F16H 3/00, F02C 7/26, F02C 7/32, F01D 15/10, F02N 11/04, F02N 15/02

(54) **RÉDUCTEUR AUTONOME À DOUBLE RAPPORT ET SYSTÈME À MOTEUR ET MACHINE ÉLECTRIQUE RÉVERSIBLE COMPRENANT CE RÉDUCTEUR**
AUTONOMES UNTERSETZUNGSGETRIEBE MIT ZWEIFACHEM ÜBERSETZUNGSVERHÄLTNIS UND SYSTEM MIT MOTOR UND REVERSIBLER ELEKTRISCHER MASCHINE UMFASSEND DIESES UNTERSETZUNGSGETRIEBE
AUTONOMOUS DUAL-RATIO REDUCTION GEAR AND SYSTEM WITH MOTOR AND REVERSIBLE ELECTRIC MACHINE COMPRISING SAID REDUCTION GEAR

(30) Priorité: 03.11.2015 FR 1560520
(43) Date de publication de la demande: 12.09.2018
(73) Titulaire: Safran Transmission Systems, 92700 Colombes (FR)
(72) Inventeur: BAUDUIN, Lionel, 77550 Moissy-Cramayel (FR); GUILLEMONT, Maxence, 77550 Moissy-Cramayel (FR)
(74) Mandataire: Brevalex
(86) Numéro de dépôt international: PCT/FR2016/052831
(87) Numéro de publication internationale: WO 2017/077229

(56) Documents cités:
- FR-A- 687 056
- FR-A- 918 931
- FR-A- 1 006 678
- FR-A- 1 077 049

## Description

Le sujet de l'invention est un réducteur autonome à double rapport de réduction, ainsi qu'un système à moteur et machine électrique réversible dans lequel ce réducteur est employé.

On entend par réducteur autonome un réducteur qui peut changer de rapport de réduction sans commande extérieure, et par machine électrique réversible une machine apte à convertir l'énergie mécanique en énergie électrique, et inversement.

Une application de l'invention concerne l'intégration d'une machine électrique apte à servir à la fois de démarreur et de générateur à un moteur adjacent. Les deux fonctions de démarrage et de génération électrique sont habituellement réalisées par deux accessoires différents pour les moteurs d'aéronefs. L'utilisation d'une machine électrique unique serait souhaitée pour alléger et simplifier le système. Le démarrage d'un moteur nécessite toutefois un très fort couple pour des régimes de rotation faibles. On pourrait y parvenir en employant une grosse machine électrique, mais cela serait préjudiciable au poids, à l'encombrement et au coût du système. Une autre façon de procéder consisterait à disposer une transmission à grand rapport de réduction entre la machine électrique et le moteur afin de faire démarrer celui-ci à couple plus faible et vitesse plus élevée de la machine; mais la vitesse que la machine prendrait quand elle travaillerait en générateur, le moteur étant à une vitesse de croisière beaucoup plus élevée qu'au démarrage, serait alors tout à fait excessive.

Les brevets FR 918 931 A et FR 1 077 049 A divulguent des dispositifs où des engrenages hélicoïdaux sont montés ensemble entre deux arbres parallèles, avec des mécanismes permettant de les mettre en prise sélectivement pour modifier le rapport de rotation des arbres. Le brevet FR 918 931 A divulgue un réducteur selon le préambule de la revendication 1.

Un aspect de l'invention est un réducteur, qui comprend deux engrenages à rapports de réduction différents de dentures, chacun des engrenages comprenant une première roue dentée montée sur un même premier axe et une seconde roue dentée montée sur un même second axe, les premières roues dentées étant des roues dentées mobiles coulissant sur le premier axe et étant munies toutes deux de reliefs d'engrènement avec des reliefs complémentaires du premier axe, lesdits reliefs des roues dentées mobiles étant présents d'un côté latéral de celles-ci, les roues dentées mobiles étant montées tournantes sur le premier axe mais rendues solidaires en rotation avec le premier axe à des positions d'engrènement respectives où leurs reliefs engrènent avec les reliefs du premier axe, où les dentures des roues dentées mobiles sont hélicoïdales et ont des inclinaisons dans un même sens en direction tangentielle par rapport au premier axe, les positions d'engrènement s'étendent entre les roues dentées mobiles, caractérisé en ce que le premier axe porte une entretoise librement coulissante, apte à buter contre les deux roues dentées mobiles simultanément, en les maintenant à une distance interdisant une simultanéité des positions d'engrènement.

Un autre aspect de l'invention est en système comprenant une machine électrique réversible, un moteur et une transmission mécanique reliant deux arbres tournants appartenant respectivement à la machine électrique et au moteur, où la transmission mécanique comprend ce réducteur.

Le passage de la machine électrique du mode en démarreur au mode générateur, ou inversement, s'accompagne dans le réducteur de l'inversion d'efforts axiaux sur les dentures hélicoïdales, qui sont responsables de mouvements de translation des roues dentées mobiles, ayant pour effet de disjoindre un des engrenages tout en accouplant l'autre. On arrive donc à obtenir des commutations de deux rapports de réduction pour imposer un fonctionnement de la machine électrique à des vitesses convenables aussi bien à l'état de démarreur qu'à celui de générateur. Ces commutations sont obtenues automatiquement, sans commande extérieure, puisque les changements d'état de la machine s'accompagnent d'inversions des sens d'efforts axiaux dans les dentures hélicoïdales. Cette absence de commande extérieure est particulièrement appréciée.

La fiabilité des commutations est accrue notamment par l'emploi de l'entretoise, qui interdit les engrènements simultanés accidentels des engrenages qui détruiraient le dispositif.

Les différents aspects, caractéristiques et avantages de l'invention seront maintenant décrits en liaison aux figures suivantes, annexées à titre purement illustratif, qui représentent une réalisation particulière de l'invention :
- la figure 1 représente schématiquement un système où l'invention peut trouver place,
- la figure 2 illustre une réalisation de l'invention,
- la figure 3 détaille l'inclinaison des dentures hélicoïdales,
- la figure 4 détaille le premier axe,
- la figure 5 détaille les reliefs de crabotage du premier axe,
- et la figure 6 représente une des roues dentées mobiles.

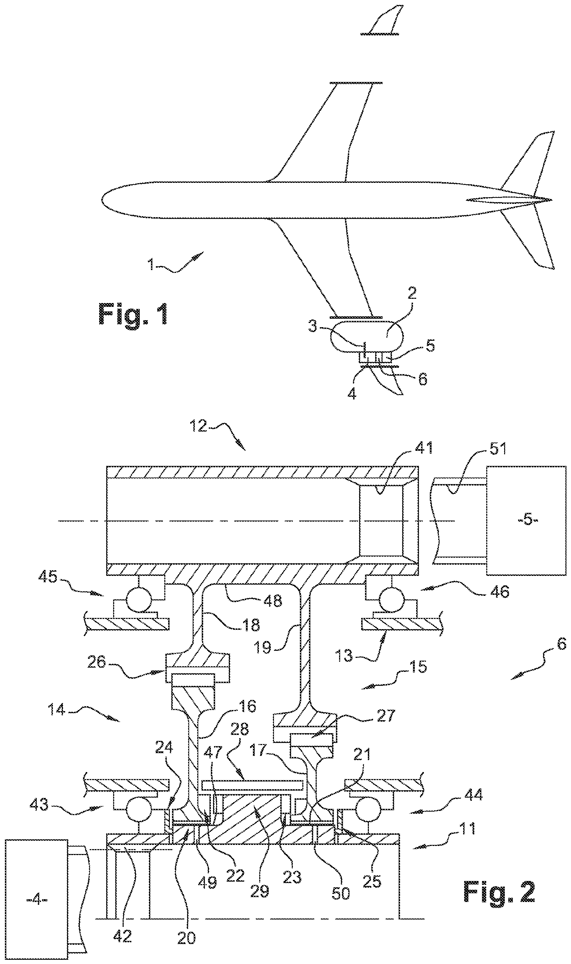

La figure 1 représente un système conforme à l'invention, où un aéronef 1 porte un moteur 2 tel qu'une turbomachine. Le moteur 2 comporte un arbre radial 3 de prise de mouvement, qui sort du côté du moteur 2 pour s'étendre dans une boîte d'engrenages 4 boulonnée à l'enveloppe du moteur 2. La boîte d'engrenages 4 contient une ou plusieurs séries d'engrenages connectés à l'arbre radial 3, dont les axes entraînent divers accessoires nécessaires au fonctionnement du moteur 2 et de l'aéronef 1, comme des pompes de carburant ou de lubrification, des générateurs électriques, ou autres. On trouve notamment un démarreur, alimenté par une batterie électrique autonome et qui fait démarrer le moteur 2 en tournant l'arbre radial 3. Le démarreur est ici une machine électrique réversible 5, qui sert de générateur électrique après le démarrage. La machine électrique réversible 5 est reliée à la boîte d'engrenages 4 par un réducteur 6 qui est l'élément essentiel de l'invention et qu'on décrira ci-dessous; il peut faire partie de la boîte d'engrenages 4 en étant contenu dans son enveloppe, ou former un constituant physiquement distinct, sans que son fonctionnement soit différent.

On se reporte à la figure 2. Le réducteur 6 est disposé entre un premier axe 11 et un second axe 12 parallèles, tourillonnant tous deux dans un carter 13 commun, seulement ébauché ici. Le premier axe 11 est situé du côté du moteur 2 et engrène avec l'arbre radial 3 tournant par l'intermédiaire de la boîte d'engrenages 4, et le second axe 12 est situé du côté de la machine électrique réversible 5 en engrenant (directement ou non) avec un arbre tournant 51 de celle-ci. Les axes 11 et 12 sont munis de cannelures, 41 et 42 respectivement, de raccordement au reste de la transmission. Comme ils sont soumis à des efforts axiaux importants, ils sont soutenus par le carter 13 au moyen de paliers aptes à supporter ces efforts, comme des roulements 43, 44, 45 et 46 à billes à contact oblique (bien d'autres paliers sont envisageables). Des épaississements 47 et 48 du premier axe 11 et du second axe 12 sont retenus respectivement entre les roulements 43, 44 et 45, 46.

La transmission des mouvements de rotation entre les axes 11 et 12 se fait par deux engrenages 14 et 15 disposés en parallèle, c'est-à-dire comprenant chacun une première roue dentée 16 et 17 dépendant du premier axe 11 et une seconde roue dentée 18 ou 19 dépendant du second axe 12. Les secondes roues dentées 18 et 19 sont fixées au second axe 12, alors que les premières roues dentées 16 et 17 sont des roues dentées mobiles, aptes à se déplacer indépendamment l'un de l'autre le long du premier axe 11, sous les conditions qu'on décrira ensuite. Elles sont montées sur des portées circulaires du premier axe 11 par des paliers lisses 20 et 21 et peuvent donc tourner à des vitesses de rotation différentes de celle dudit premier axe 11.

Des perçages 49 et 50 traversent le premier axe 11, qui est creux, pour acheminer de l'huile de lubrification des paliers lisses 20 et 21 sous l'action des forces centrifuges; cette huile est fournie par un dispositif d'alimentation d'un genre connu. D'autres dispositifs de lubrification de genres connus, comprenant par exemple des buses de projection d'huile, lubrifient les roulements 43, 44, 45, 46 et les dentures 26 et 27.

Les roues dentées mobiles 16 et 17 peuvent être réellement accouplées en rotation au premier axe 11 par des crabots 22 et 23 respectifs, dont les dents liées au premier axe 11 et les dents liées aux roues dentées mobiles 16 et 17 sont toutes saillantes en direction axiale du premier axe 11 : l'engrènement s'effectue à une position axiale des roues dentées mobiles 16 et 17 le long du premier axe 11, à une extrémité de leur course de mobilité ; une extrémité opposée est déterminée par une butée axiale 24 ou 25 respective, équipée d'une couronne à faible frottement, adjacente aux roulements 43 et 44.

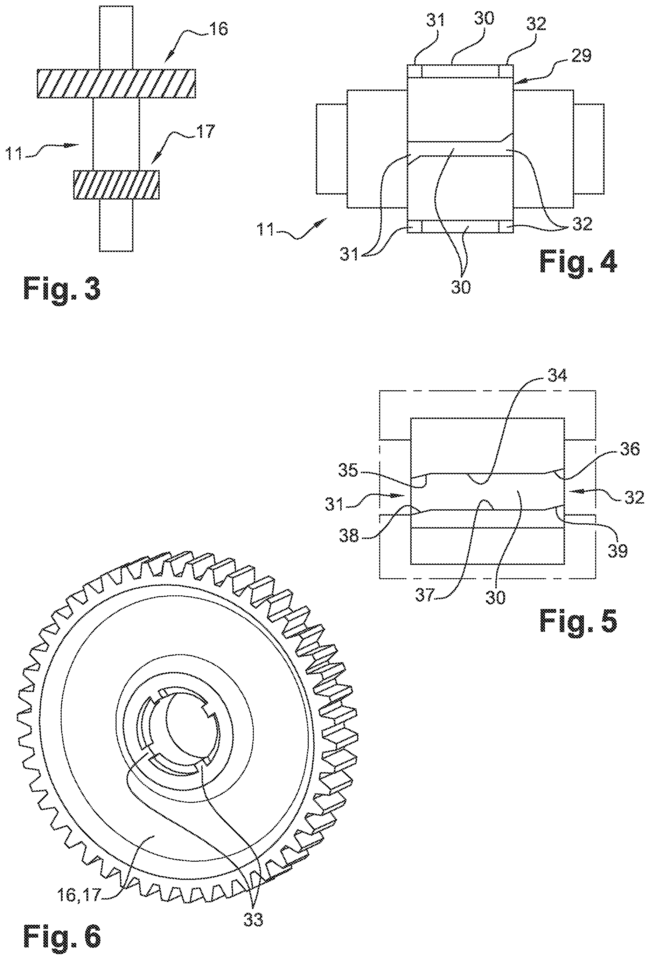

Dans ce mode de réalisation, les crabots 22 et 23 sont adjacents l'un à l'autre, et entourés par les butées axiales 24 et 25 ; les engrenages 14 et 15 ont alors des dentures 26 et 27 avec une inclinaison tangentielle de même sens sur la direction du premier axe 11, ce qu'illustre la figure 3.

Il résulte de cette situation que, lorsqu'un couple est appliqué au réducteur 6, les résultantes axiales des forces passant par les dentures 26 et 27 déplacent les roues dentées mobiles 16 et 17 dans le même sens axial sur le premier axe 11, avec l'effet que l'un des crabots 22 et 23 entre en engrènement, alors que l'autre est disjoint. La transmission de puissance à travers le réducteur 6 est donc toujours assurée par un seul des engrenages 14 et 15. Le sens d'inclinaison des dentures 26 et 27 est choisi pour que, quand la machine électrique réversible 5 fonctionne en démarreur, l'engrenage (ici 14) ayant le rapport de réduction le plus grand soit seul actif, grâce à l'engrènement du crabot 22, et transmette le mouvement au moteur 2. Mais quand la machine électrique réversible 5 passe en mode de générateur, le sens du couple appliqué est opposé, ce qui inverse aussi le sens des résultantes axiales des forces sur les dentures 26 et 27, et déplace simultanément les roues dentées mobiles 16 et 17 de manière à amener le crabot 23 en engrènement, disjoignant l'autre des crabots 22, et à imposer donc une transmission du mouvement par l'engrenage 15 ayant le rapport de réduction le plus petit. La roue dentée mobile 16 ou 17 qui ne transmet pas le mouvement est rejetée contre la butée axiale 24 ou 25. Les dentures 26 et 27 ont des largeurs comparables ou supérieures aux longueurs des courses de mouvements axiaux des roues dentées mobiles 16 et 17, afin de toujours rester en engrènement. Un fonctionnement identique de commutations d'engrènements des crabots 22 et 23 serait obtenu avec les crabots 22 et 23 d'un même côté des courses de mouvement des roues dentées mobiles 16 et 17 (à droite de la figure 2 par exemple, les butées axiales 24 et 25 étant alors toutes deux à gauche) et des inclinaisons de dentures 26 et 27 en sens opposés dans la direction tangentielle du premier axe 11.

Cette commutation des modes de transmission s'effectue donc automatiquement, sans aucune commande extérieure. Un risque contre lequel il convient de se prémunir est toutefois une coexistence accidentelle de l'engrènement des deux crabots 22 et 23, qui détruirait alors la transmission. C'est pourquoi on a disposé une entretoise 28 libre de coulisser autour du premier axe 11, entre les roues dentées mobiles 16 et 17, qui les maintient à un écartement suffisant pour garantir que l'engrènement d'un seul des crabots 22 et 23 à la fois est possible.

Un autre risque de mauvais fonctionnement serait une difficulté de commutation, impliquant soit une entrée en engrènement difficile pour le crabot 22 ou 23 concerné, soit une disjonction difficile. On propose alors un agencement tel que celui des figures suivantes 4, 5 et 6.

Les reliefs des crabots 22 et 23 sont réalisées sur une portion centrale 29 épaisse du premier axe 11, en exécutant des rainures 30 qui peuvent être au nombre de quatre par exemple. Des portions extrêmes 31 et 32 des rainures 30 sont des portions actives qui assurent l'engrènement de crabotage avec les roues dentées mobiles 16 et 17 respectivement, en recevant des dents 33 des roues dentées mobiles 16 et 17. Les faces latérales des extrémités 31 et 32 des rainures 30 peuvent être alors en dépouille, c'est-à-dire avec une inclinaison en direction tangentielle par rapport à la direction axiale du premier axe 11. Ces inclinaisons sont dans le même sens en direction tangentielle et donnent les fonctionnements suivants.

Dans un des modes, la transmission de puissance aux dents 33 s'effectue par une des faces latérales 34 des rainures 30. Les dépouilles aux extrémités 31 et 32 étant dans le même sens, la dépouille 35 de l'extrémité 31 a pour effet de favoriser ou de maintenir l'engrènement du crabot 22 et de la roue dentée mobile 16, en produisant une résultante axiale des forces d'interaction qui déplace la roue dentée mobile 16 vers la partie centrale 29; l'inclinaison de même sens de la dépouille 36 à l'extrémité 32 opposée produit une résultante axiale de même sens sur l'autre roue dentée mobile 17, qui a donc pour effet de la chasser et de rompre l'engrènement du crabot 23. L'autre face latérale 37 des rainures 30 présente de même des dépouilles 38 et 39 aux parties d'extrémités 31 et 32, respectivement; la dépouille 38 est exploitée pour favoriser la disjonction du crabot 22 et la dépouille 39 pour favoriser l'engrènement du crabot 23, le contact de cette face latérale 37 avec les dents 33 s'effectuant à l'autre état de fonctionnement du système.

Les valeurs angulaires d'inclinaison des dépouilles 36 et 38 peuvent avantageusement être identiques, puisque ces dépouilles 36 et 38 ont la même fonction ; les dépouilles 35 et 39 peuvent de même avoir des valeurs d'inclinaison identiques, mais qui peuvent être différentes de celles des dépouilles 36 et 38. Des dépouilles correspondant à des inclinaisons en direction tangentielle peuvent de même être prévues sur les faces latérales des dents 33.

## Revendications

1. Réducteur (6), comprenant deux engrenages (14, 15) à rapports de réduction différents de dentures (26, 27), chacun des engrenages comprenant une première roue dentée montée sur un même premier axe (11) et une seconde roue dentée montée (18, 19) sur un même second axe (12), les premières roues dentées étant des roues dentées mobiles (16, 17) coulissant sur le premier axe et étant munies toutes deux de reliefs d'engrènement avec des reliefs complémentaires du premier axe, lesdits reliefs des roues dentées mobiles étant présents à un côté latéral de celles-ci, les roues dentées mobiles étant montées tournantes sur le premier axe, mais rendues solidaires en rotation avec le premier axe à des positions d'engrènement respectives où leurs reliefs engrènent avec les reliefs du premier axe, où les dentures (26, 27) des roues dentées mobiles (16, 17) sont hélicoïdales et ont des inclinaisons dans un même sens en direction tangentielle par rapport au premier axe (11), les positions d'engrènement s'étendant entre les roues dentées mobiles, **caractérisé en ce que** le premier axe (11) porte une entretoise (28) librement coulissante, apte à buter contre les deux roues dentées mobiles simultanément, en les maintenant à une distance interdisant une simultanéité des positions d'engrènement.

2. Réducteur selon la revendication 1, **caractérisé en ce que** les mouvements coulissants des roues dentées mobiles sont limités par les positions d'engrènement d'un côté et par des butées (24, 25) sur le premier axe d'un côté opposé.

3. Réducteur selon l'une quelconque des revendications 1 ou 2, **caractérisé en ce que** les reliefs du premier axe (11) sont en dépouille (35, 36, 38, 39) en direction tangentielle au moins à une partie d'extrémité.

4. Système comprenant une machine électrique réversible (5), un moteur (2) et une transmission mécanique (4, 6) reliant deux arbres tournants (3, 51) appartenant respectivement à la machine électrique et au moteur, **caractérisé en ce que** la transmission mécanique comprend un réducteur (6) selon l'une quelconque des revendications précédentes.

## Patentansprüche

1. Getriebe (6) mit zwei Zahnradpaaren (14, 15) mit verschiedenen Untersetzungsverhältnissen der Verzahnungen (26, 27), wobei jedes der Zahnradpaare ein auf einer und derselben ersten Achse (11) sitzendes erstes Zahnrad sowie ein auf einer und derselben zweiten Achse (12) sitzendes zweites Zahnrad (18, 19) umfasst, wobei die ersten Zahnräder verschiebbare Zahnräder (16, 17) sind, die auf der ersten Achse gleiten und beide mit Eingriffsreliefs für den Eingriff mit komplementären Eingriffsreliefs der ersten Achse ausgestattet sind, wobei diese Eingriffsreliefs der verschiebbaren Zahnräder auf einer Seite von diesen vorgesehen sind, wobei die verschiebbaren Zahnräder auf der ersten Achse drehend angebracht sind, jedoch in jeweiligen Eingriffsstellungen, in denen ihre Reliefs mit den Reliefs der ersten Achse in Eingriff kommen, drehfest mit der ersten Achse gemacht werden, wobei die Verzahnungen (26, 27) der verschiebbaren Zahnräder (16, 17) schräg ausgeführt sind und Neigungen in der gleichen Richtung tangential zur ersten Achse (11) aufweisen, wobei die Eingriffsstellungen zwischen den verschiebbaren Zahnrädern liegen,
**dadurch gekennzeichnet,**
**dass** auf der ersten Achse (11) ein frei gleitender Abstandhalter (28) sitzt, der geeignet ist, gleichzeitig an den beiden verschiebbaren Zahnrädern in Anschlag zu kommen, wobei er sie in einem Abstand zueinander hält, der eine Gleichzeitigkeit der Eingriffsstellungen verhindert.

2. Getriebe nach Anspruch 1,
**dadurch gekennzeichnet,**
**dass** die Gleitbewegungen der verschiebbaren Zahnräder begrenzt sind, und zwar auf einer Seite durch die Eingriffsstellungen und auf einer entgegengesetzten Seite durch Anschläge (24, 25).

3. Getriebe nach einem der Ansprüche 1 oder 2,
**dadurch gekennzeichnet,**
**dass** die Reliefs der ersten Achse (11) zumindest in einem Endbereich Schrägen (35, 36, 38, 39) in tangentialer Richtung aufweisen.

4. System mit einer umschaltbaren elektrischen Maschine (5), einem Motor (2) und einer mechanischen Übertragung (4, 6), die zwei Drehwellen (3, 51) verbindet, die zu der elektrischen Maschine bzw. zu dem Motor gehören,
**dadurch gekennzeichnet,**
**dass** die mechanische Übertragung ein Getriebe (6) nach einem der vorigen Ansprüche aufweist.

## Claims

1. Reduction gear (6) comprising two gears (14, 15) with different reduction ratios of the teeth (26, 27), each gear having a first toothed wheel mounted on the same first shaft (11) and a second toothed wheel (18, 19) mounted on the same second shaft (12), the first toothed wheels being mobile toothed wheels (16, 17) free to slide on the first shaft and both being provided with mesh reliefs with complementary reliefs on the first shaft, said reliefs of the mobile toothed wheels being present on a lateral side of the toothed wheels, the mobile toothed wheels being installed free to rotate on the first shaft but fixed in rotation with the first shaft at corresponding gear positions in which their reliefs engage with the reliefs on the first shaft, in which the teeth (26, 27) of the mobile toothed wheels (16, 17) are helical and have inclinations in a same tangential direction relative to the first shaft (11), the meshing positions extending between the mobile toothed wheels, **characterised in that** the first shaft (11) carries a freely sliding spacer (28), that can come into contact with the two mobile toothed wheels simultaneously, keeping them at a distance that prevents the gear positions from being engaged simultaneously.

2. Reduction gear according to claim 1, **characterised in that** the sliding movements of the mobile toothed wheels are limited by engagement positions on one side and by stops (24, 25) on the first shaft on the opposite side.

3. Reduction gear according to either claim 1 or 2, **characterised in that** the reliefs on the first shaft (11) are tapered (35, 36, 38, 39) in the tangential direction at least at one end part.

4. System comprising a reversible electrical machine (5), an engine (2) and a mechanical transmission (4, 6) connecting two rotating shafts (3, 51) belonging to the electrical machine and to the engine respectively, **characterised in that** the mechanical transmission comprises a reduction gear (6) according to any one of the previous claims.
